Europäisches Patentamt

European Patent Office

Office européen des brevets

(11) Numéro de publication: **0 110 759**
**A1**

## (12) DEMANDE DE BREVET EUROPEEN

(21) Numéro de dépôt: 83402173.5

(22) Date de dépôt: 09.11.83

(51) Int. Cl.³: **H 02 J 13/00**

(30) Priorité: 26.11.82 FR 8219843

(71) Demandeur: **ENERTEC SOCIETE ANONYME, 12, Place des Etats-Unis, F-92120 Montrouge (FR)**

(43) Date de publication de la demande: **13.06.84 Bulletin 84/24**

(72) Inventeur: **Lorre, Daniel Jean, 10, rue de la Noblesse, F-86180 Buxerolles (FR)**

(74) Mandataire: **Bentz, Jean-Paul, GIERS SCHLUMBERGER Service BREVETS 12, place des Etats-Unis, F-92124 Montrouge Cedex (FR)**

(84) Etats contractants désignés: **AT BE DE FR**

(54) **Dispositif de protection d'un équipement d'injection série sur le réseau.**

(57) Ce dispositif de protection d'un équipement (1) pour l'injection série de signaux de télécommande sur un réseau électrique, propre à agir lorsqu'apparaît une surtension entre deux au moins des conducteurs (2A, 2B, 2C) raccordant l'équipement au réseau (4A, 4B, 4C) comprend: un circuit de redressement (D1 D6, Cl C6); un circuit de détection et de commande (7); un interrupteur électronique commandé (8) propre à court-circuiter lesdits conducteurs en réponse à un signal de sortie du circuit de détection et de commande; et un interrupteur commandé à contact mécanique également propre à court-circuiter lesdits conducteurs en réponse à un signal de sortie du circuit de détection et de commande.

Les entrées de détection (7A, 7B) du circuit de détection et de commande sont reliées aux bornes de polarités opposées du pont de redressement.

DISPOSITIF DE PROTECTION D'UN EQUIPEMENT
D'INJECTION SERIE SUR LE RESEAU

La présente invention concerne un dispositif de protection, propre à agir lorsqu'apparaît une anomalie entre au moins deux conducteurs électriques, et comprenant :

- un pont de redressement commun à ces conducteurs,

- un circuit de détection et de commande conçu pour détecter ladite anomalie entre lesdits conducteurs et pour produire au moins un signal de sortie en réponse à une telle anomalie,

- un interrupteur électronique commandé propre à court-circuiter lesdits conducteurs en réponse à un signal de sortie du circuit de détection et de commande, et,

- un interrupteur commandé à contact mécanique également propre à court-circuiter lesdits conducteurs en réponse à un signal de sortie du circuit de détection et de commande,

Un tel dispositif est décrit dans le brevet français FR 2 052 178.

Toutefois, alors que ce brevet concerne la protection d'un réseau de câbles en cas de l'endommagement de son isolation, la présente invention concerne plus précisément un dispositif de protection d'un équipement pour l'injection série des signaux de télécommande sur un réseau électrique, propre à agir lorsqu'apparaît une anomalie sur les conducteurs qui, à travers des transformateurs d'injection, raccordent l'équipement au réseau.

Ces équipements d'injection série comprennent généralement un générateur de fréquence pour l'élaboration des ordres de télécommande injectés sur le réseau et un shunt résonnant comportant une pluralité de condensateurs, ces matériels étant raccordés par des conducteurs à des transformateurs d'injection branchés sur le réseau électrique.

En cas d'apparition d'un défaut sur le réseau se traduisant par un court-circuit, des surtensions peuvent apparaître entre les conducteurs de raccordement, risquant d'endommager au moins le shunt résonnant.

Actuellement il est connu de remédier à ce risque en branchant un éclateur en parallèle sur chaque condensateur d'accord sur la fréquence du réseau du shunt résonnant, les éclateurs s'amorçant dès qu'une surtension anormale apparaît à leurs bornes.

Cette technique connue présente au moins deux inconvénients ; le premier est que seuls les condensateurs d'accord fréquence réseau sont protégés, le générateur ainsi que les condensateurs d'accord parallèle à la fréquence de télécommande pouvant toujours subir quelque endommagement, en raison de l'importance des énergies mises en jeu, et le second est que les éclateurs ne peuvent généralement fonctionner plusieurs fois de suite sans nettoyage, réglage et vérification intermédiaires.

- 3 -

0110759

Dans ce contexte, le but de la présente invention est de proposer un dispositif assurant une protection efficace de l'ensemble des équipements d'injection, sans exiger un entretien contraignant.

Or, bien que des dispositifs de protection soient connus de façon générale, notamment pour la protection des lignes, les phénomènes transitoires apparaissant au niveau d'un équipement d'injection en cas d'anomalie sur le réseau sont rendus complexes en raison de la présence des transformateurs d'injection et du shunt résonnant, de sorte que l'invention doit résoudre le problème de la structure à donner au dispositif de protection pour que cette protection ait une fiabilité et une efficacité maximales.

Le dispositif conforme à la présente invention est essentiellement caractérisé en ce que le circuit de détection et de commande est sensible aux surtensions et comporte deux entrées de détection reliées aux bornes de courant redressé, c'est-à-dire de polarités opposées, du pont de redressement. L'une de ces entrées de détection peut être reliée à un potential intermédiaire entre les potentiels respectifs des bornes de polarités opposées du circuit de redressement, ce potentiel intermédiaire étant fourni par un diviseur de tension branché entre ces bornes.

Pour obtenir une plus grande sécurité en cas de surtension, l'interrupteur électronique est monté en série avec une inductance et le circuit de détection et de commande est conçu pour délivrer à l'interrupteur électronique, en cas de surtension, un signal de commande composé de plusieurs impulsions.

- 4 - 0110759

D'autres caractéristiques de l'invention seront décrites ci-après, à titre indicatif et nullement limitatif, en référence au dessin annexé, dans lequel :

- la figure 1 est un schéma relatif à l'application de l'invention au cas d'un équipement d'injection série sur un réseau triphasé moyenne tension; et

- la figure 2 est un schéma relatif à l'application de l'invention au cas d'un équipement d'injection série sur neutre d'un réseau basse tension.

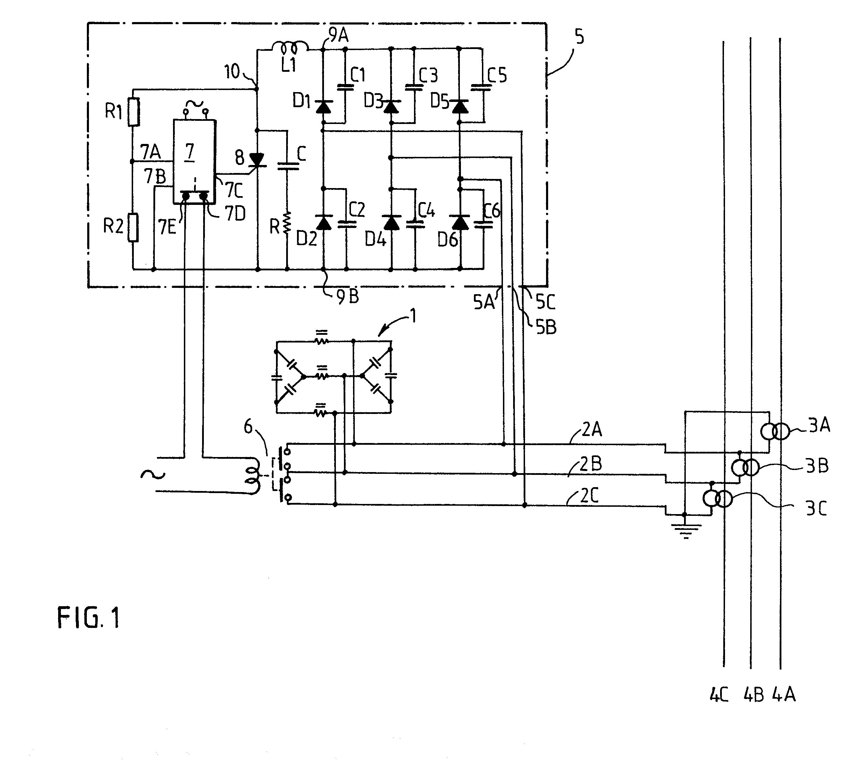

La figure 1 représente en 1 un shunt résonnant faisant partie d'un équipement d'émission de télécommande centralisée que l'invention vise à protéger contre les surtensions résultant d'un court-circuit sur le réseau.

Ce shunt 1 est raccordé par trois conducteurs 2A, 2B, 2C à trois transformateurs d'injection respectifs 3A, 3B, 3C installés sur les phases respectives 4A, 4B, 4C du réseau électrique.

En cas de court-circuit sur le réseau, le courant sur chacun des conducteurs 2A, 2B, 2C peut atteindre 6000A efficaces tandis que la surtension entre ces conducteurs peut dépasser 1800 V.

Le dispositif de protection de l'invention comprend d'une part une combinaison de circuits désignée de façon générique par le chiffre de référence 5, et d'autre part un interrupteur 6 à contact mécanique et commande électromagnétique, existant éventuellement dans les installations de l'art antérieur. Cet interrupteur 6 à contact mécanique est directement installé sur les conducteurs 2A, 2B, 2C de façon à pouvoir court-circuiter directement ces conducteurs entre eux lorsqu'il est commandé.

La combinaison de circuits 5 est raccordée par ses trois entrées 5A, 5B, 5C aux trois conducteurs 2A, 2B, 2C, et comprend essentiellement un circuit de redressement des tensions triphasées DI à D6, CI à C6, un circuit de détection et de commande 7, un thyristor 8, et un diviseur de tension RI R2.

Le circuit de redressement DI à D6, CI à C6, est constitué par un pont de Graëtz connu en soi, utilisant des diodes DI à D6 sur lesquelles sont montés, en parallèle, des condensateurs respectifs CI à C6.

Ce circuit de redressement comprend trois bornes de tensions alternatives constituées par les entrées 5A, 5B et 5C et deux bornes de tension redressée, 9A, 9B, de polarités opposées.

Le thyristor 8 est monté en série avec une inductance de protection L1 entre les bornes 9A, 9B de tension redressée. Une liaison RC à forte impédance relie la borne de tension redressée négative 9B au point commun 10 du thyristor 8 et de l'inductance L1.

Un diviseur de tension par exemple à deux résistances R1 R2 est branché entre le point commun 10 et la borne négative 9B.

Le circuit de détection et de commande comprend deux entrées 7A et 7B raccordées aux bornes de la résistance R2 du diviseur de tension, une sortie 7C reliée à la borne de commande ou gachette du thyristor 8, et deux sorties 7D et 7C reliées à l'interrupteur 6.

Lorsqu'il détecte entre ses bornes 7A et 7B une tension supérieure à un seuil prédéterminé, le circuit de détection et de commande 7 envoie des signaux sur ses sorties d'une part pour allumer le thyristor 8 et court-circuiter ainsi les conducteurs 2A, 2B et 2C à travers le pont de Graëtz et d'autre part pour fermer l'interrupteur 6 et court-circuiter ainsi, de façon directe, ces mêmes conducteurs 2A, 2B, et 2C.

Les circuits de détection et de commande sont eux-mêmes bien connus de l'homme de l'art et il est donc inutile d'en donner ici une description détaillée.

Le circuit 7 peut par exemple être essentiellement constitué par le détecteur de surtension MC 3523 de MOTOROLA et par un relais reliant électriquement entre elles les sorties 7D et 7E en cas de surtension.

La liaison électrique des sorties 7D et 7E provoque la fermeture d'un chemin électrique entre une alimentation et l'interrupteur 6, donc l'activation et la fermeture de cet interrupteur sur les trois conducteurs 2A, 2B, 2C.

En outre le circuit de détection et de commande 7 peut comprendre, pour sa sortie 7C, un multivibrateur également connu en soi pour délivrer sur cette sortie, en cas de surtension, un signal d'allumage du thyristor qui se présente sous forme de plusieurs impulsions consécutives. Cette caractéristique permet d'éliminer les conséquences néfastes d'un défaut d'allumage du thyristor à la première impulsion, ou de son extinction momentanée.

L'intérêt de l'invention est le suivant : lorsqu'une surtension apparaît, l'énergie mise en jeu peut être considérable et il importe de la canaliser très rapidement. Le thyristor 8 joue précisément ce rôle, en court-circuitant les conducteurs 2A, 2B, 2C à travers le pont de Graëtz.

Le thyristor ne peut à lui seul canaliser toute l'énergie électrique mise en jeu. Cependant son action est telle que la surtension est considérablement réduite au moment où l'interrupteur à contact mécanique 6, qui peut quant à lui supporter le courant de court-circuit, se ferme, 40 ms environ après l'apparition de la surtension, ce retard provenant de l'inertie de cet interrupteur.

Les conducteurs 2A, 2B, et 2C étant court-circuités, la protection de l'équipement est totale.

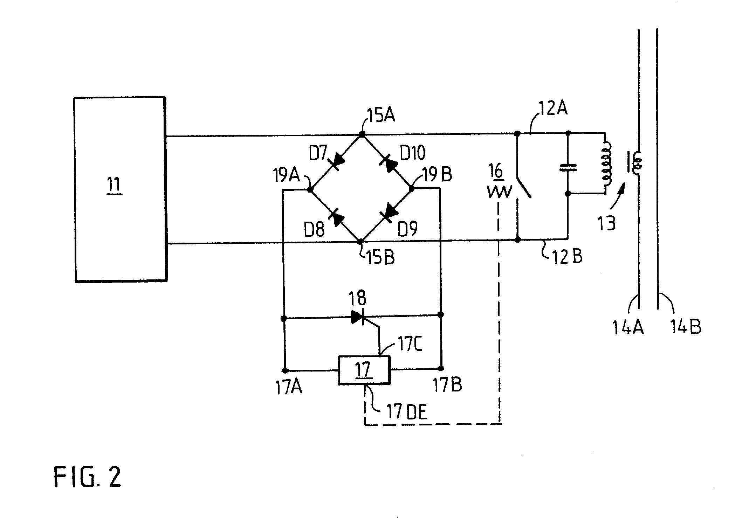

La figure 2 représente une variante simplifiée de l'invention applicable à un équipement d'injection série sur le neutre d'un réseau basse tension comprenant par exemple un générateur de fréquence 11. Ce générateur est raccordé par deux conducteurs 12A, 12B à un transformateur d'injection basse tension 13 installé sur le neutre 14A d'une ligne 14A, 14B.

Le dispositif de protection comprend un pont de redressement à diodes D7 à D10 branché entre les bornes à tension alternative 15A, 15B du générateur 11, un interrupteur commandé à contact mécanique 16 susceptible de court-circuiter les conducteurs 12A, 12B, un circuit de détection et de commande 17 et un thyristor 18. Le circuit de détection 17 et le thyristor 18 sont montés en parallèle entre les bornes à tension redressée 19A, 19B du pont de diodes. Le circuit de détection 17 reçoit donc directement entre ses entrées 17A, 17B la tension redressée, sans l'utilisation d'un diviseur de tension. Une sortie 17C du circuit de détection et de commande est reliée à la gachette du thyristor 18, tandis qu'une sortie 17DE est reliée à l'interrupteur 16, l'action du circuit de détection 17 sur les éléments 16 et 18 étant la même que celle déjà décrite du circuit de détection 7 sur les éléments 6 et 8.

Au lieu d'utiliser un thyristor unique branché entre les bornes communes de tension redressée 9A, 9B, il serait également possible de prévoir des couples de thyristors ou autres éléments semi-conducteurs commandés montés en opposition entre les couples de conducteurs voisins (2A, 2B et 2B, 2C) parmi les conducteurs 2A, 2B, 2C, pour obtenir le court-circuit commandé de ces conducteurs.

REVENDICATIONS

1 - Dispositif de protection propre à agir lorsqu'apparaît une anomalie entre au moins deux des conducteurs électriques (2A, 2B, 2C), comprenant : un pont de redressement (Dl D6, CI C6) commun à ces conducteurs; un circuit de détection et de commande (7) conçu pour détecter ladite anomalie entre lesdits conducteurs et pour produire au moins un signal de sortie en réponse à une telle anomalie; un interrupteur électronique commandé (8) propre à court-circuiter lesdits conducteurs en réponse à un signal de sortie du circuit de détection et de commande, et; un interrupteur commandé à contact mécanique (6) également propre à court-circuiter lesdits conducteurs en réponse à un signal de sortie du cicuit de détection et de commande, caractérisé en ce que le circuit de détection et de commande (7) est sensible aux surtensions et comporte deux entrées de détection (7A, 7B) reliées aux bornes (9A, 9B) de polarités opposées du pont de redressement, ledit dispositif étant destiné à protéger un équipement (1) pour l'injection série de signaux de télécommande sur un réseau électrique relié à ce réseau par lesdits conducteurs et à travers des transformateurs.

2 - Dispositif suivant la revendication 1 caractérisé en ce que l'une des entrées de détection (7A) du circuit de détection et de commande (7) est reliée à un potentiel intermédiaire entre les potentiels respectifs des bornes (9A, 9B) de polarités opposées du circuit de redressement, ce potentiel intermédiaire étant fourni par un diviseur de tension (R1 R2) branché entre ces bornes.

3 - Dispositif suivant l'une quelconque des revendications précédentes, dans lequel l'interrupteur électronique commandé (8) est branché entre les bornes de courant redressé de polarités opposées (9A, 9B) du pont de redressement, caractérisé en ce que cet interrupteur électronique est monté en série avec une inductance (LI).

4 - Dispositif suivant l'une quelconque des revendications précédentes, caractérisé en ce que le circuit de détection et de commande est conçu pour délivrer à l'interrupteur électronique, en cas de surtension, un signal de commande composé de plusieurs impulsions.

FIG.1

FIG. 2

0110759

Numéro de la demande

**Office européen des brevets**

**RAPPORT DE RECHERCHE EUROPEENNE**

EP 83 40 2173

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,A | FR-A-2 052 178 (INSTITUT GORNOGO DELA IM.A.A. SKOCHINSKOGO)<br>* page 2, ligne 23 - page 3, ligne 38; figure 1 * | 1 | H 02 J 13/00 |
| | --- | | |
| A | FR-A-2 106 732 (ALSTHOM)<br>* page 1, lignes 15-24; page 2, lignes 17-28; figure 1 * | 1 | |
| | --- | | |
| A | FR-A-2 096 663 (E.D.F.)<br>* page 2, ligne 8 - page 3, ligne 20; figures 1,4 * | 1-3 | |
| | --- | | |
| A | DE-A-2 723 164 (SIEMENS)<br>* page 4, ligne 20 - page 5, ligne 3; figure 1 * | 1 | |
| | ----- | | |

DOMAINES TECHNIQUES RECHERCHES (Int. Cl. 3)

H 02 H
H 02 J

Le présent rapport de recherche a été établi pour toutes les revendications

| Lieu de la recherche | Date d'achèvement de la recherche | Examinateur |
|---|---|---|
| LA HAYE | 23-02-1984 | HELOT H.V. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82